# EUROPEAN PATENT APPLICATION

(11) **EP 3 798 773 A1**
(43) Date of publication of application: **31.03.2021**
(21) Application number: 19200565.0
(22) Date of filing: 30.09.2019
(51) Int. Cl.: G05B 19/4103, G05B 19/4069

(54) **EFFICIENT TOOL PATH DISCRETIZATION BASED ON PHYSICALLY JUSTIFIED CRITERIA**

(71) Applicant: Siemens Aktiengesellschaft, 80333 München (DE); Siemens Industry Software Ltd., 7019900 Tel Aviv (IL)
(72) Inventor: ARMBRUST, Frank, 10559 Berlin (DE); BITTEROLF, David, 91056 Erlangen (DE); FINARO, Eduard, 49102 Petach Tikva (IL); GRABOWSKI, Volker, 81739 München (DE); HARTMANN, Dirk, 85617 Assling (DE); KAMPS, Tobias, 80538 München (DE); OBST, Brigit, 80935 München (DE); REGULIN, Daniel, 81825 München (DE); SCHNÖS, Florian Ulli Wolfgang, 80939 München (DE); TAUCHMANN, Sven, 09127 Chemnitz (DE)
(74) Representative: Maier, Daniel Oliver

(57) **Abstract**

The invention relates to a method for providing a discretised tool path for machining a workpiece to obtain a predetermined workpiece geometry. The method comprises providing a first discretised tool path for machining the workpiece with a pre-determined numerical controlled machine, wherein the first discretised tool path is defined by a first sequence of support points; providing for each support point of the first sequence of support points at least a value for at least one interaction parameter describing an interaction of the tool with the workpiece; comparing at least one support point, except for the first and last support point of the first sequence of support points, of the first sequence of support points and the associated value of the at least one interaction parameter of the support point with the subsequent support point and the value of the at least one interaction parameter associated with the subsequent support point; and removing the respective support point from the first sequence of support points based on the result of the comparison to obtain a second sequence of support points defining a second discretised tool path for machining the workpiece with the predetermined numerical controlled machine to obtain the predetermined workpiece geometry. Furthermore, a computer program for performing the method and a sequence of control commands for a numerical controlled machine obtained by the method is provided.

## Description

The disclosure relates to a method for a computer-aided optimization of a numerically controlled machining of a workpiece. More particularly, the disclosure relates to a method for providing a discretised tool path for machining a workpiece to obtain a predetermined workpiece geometry. Moreover, the disclosure relates to a sequence of control commands for controlling a numerical controlled machine to machine a workpiece. In addition, the disclosure relates to a computer program product for performing the method.

WO 2018/041476 A1 relates to a method for the computer-assisted optimization of a numerically controlled machining process of a workpiece using a machining module. The method is characterized in that in a first step, the machining process is simulated using a specified workpiece geometry and a sequence of control commands for controlling the machining module. Using the resulting simulation result, at least one characteristic variable of the machining process is then ascertained. The at least one characteristic variable is checked with respect to at least one specified optimization variable for a machining process of the workpiece using the machining module. If a deviation from at least one optimization variable is ascertained during the check, the sequence of control commands are adapted using an ascertained deviation between the at least one characteristic variable and the at least one optimization variable, and the simulating, ascertaining, and checking steps are carried out again using the adapted sequence of control commands. If all optimization criteria are satisfied, the resulting sequence of control commands is provided in order to produce the workpiece using the machining module. The aforementioned method expands a digital tool chain for manufacturing workpieces on machine tools which are numerically controlled using a sequence of control commands, thereby simplifying and improving the production of a sequence of control commands, i.e. NC code.

The known method may result in a very long sequence of control commands with many support points for a prescribed workpiece tolerance. Said very long sequence of control commands may imply challenges during processing of the sequence of control commands by the numerical controlled machine. Hence, there may be a need for a shorter sequence of control commands.

Said need has been addressed with the subject-matter of the independent claims. Advantageous embodiments are described in the dependent claims.

It is proposed a method for providing a discretised tool path for machining a workpiece to obtain a predetermined workpiece geometry, wherein the method comprises providing a first discretised tool path for machining the workpiece with a predetermined numerical controlled machine, wherein the first discretised tool path is defined by a first sequence of support points; providing for each support point of the first sequence of support points at least a value for at least one interaction parameter describing an interaction of the tool with the workpiece; comparing at least one support point, except for the first and last support point of the first sequence of support points, of the first sequence of support points and the associated value of the at least one interaction parameter of the support point with the subsequent support point and the value of the at least one interaction parameter associated with the subsequent support point; and removing the respective support point from the first sequence of support points based on the result of the comparison to obtain a second sequence of support points defining a second discretised tool path for machining the workpiece with the predetermined numerical controlled machine to obtain the predetermined workpiece geometry.

In an embodiment of the method, each support point indicates a movement trajectory to be performed by a tool of the machine to the next support point. The movement trajectory from each support point to the next support points may correspond to linear movements. For example, it may be indicated to go directly to from the current position x₁, y₁ and z₁ to position x₂, y₂ and z₂. Alternatively, it may be indicated to go to the position x₂, y₂ and z₂ via a trajectory which follows the arc of a circle having a centre x_{c}, y_{c}, z_{c} and a radius r. The whole discretised tool path may consist of basic movement trajectories like linear motion and arcs. The positions to go to may also be indicated in circular or spherical coordinates.

A further embodiment of the method prescribes removing the respective support point comprises removing the respective support point if the value of the at least first interaction parameter changes less than a predetermined threshold, and if the indicated movement trajectory changes less than a predetermined threshold. The thresholds may be selected by a user or may be automatically derived from the tolerances to be observed by the machined workpiece. In case more than a first interaction parameter is used, removing the respective support point may comprise removing the respective support point if the values of all interaction parameters change less than a respective predetermined threshold.

Additionally an embodiment of the method is proposed, wherein the first interaction parameter is one of: a force experienced by a tool of the numerical controlled machine, a torque experienced by a tool of the numerical controlled machine, a temperature of a tool of the numerical controlled machine or of the workpiece. The force may correspond to a force expressed in three dimensions. A value of the force may correspond to a vector or a scalar. The force experienced by the tool may correspond to a cutting force. The cutting force or a torque may be experienced by a tool rotated by the numerical controlled machine. The force and the torque may also be experiences by a feed rate or by a workpiece and tool material. The cutting force may have a direct influence on the deflection of the tool during machining of the workpiece and the obtainable tolerances. Information on the cutting force may help to keep the tolerances within prescribed limits. Moreover, cutting forces and torques may have direct influence on the surface quality of the final workpiece. The same applies to a temperature of the workpiece at the machining point. In addition, forces, torques and temperatures may influence wear of the tool. Thus, the numerical controlled machine may determine when the tool is to be changed due to too much wear.

In another embodiment of the method, removing the respective support point comprises removing the respective support point if the direction of the force with respect to the corresponding movement trajectory changes less than a predetermined threshold or if the absolute direction of the force with respect to the workpiece changes less than a predetermined threshold. A changing direction of the force may have a significant influence on the deflection of the tool as the stiffness of the numerical controlled machine in a particular direction may be more significant in one direction than in another direction. If the tool moves along the arc of a circle, the absolute direction of the force may change. However, if the direction of the force with respect to the movement trajectory does not change, the absolute change may sometimes have no influence on the measures to be taken by the numerical controlled machine to avoid deflection. This may happen, if the numerical controlled machine moves the tool along the arc by merely rotating an arm of the numerical controlled machine. Thus, the support point may be removed if the relative direction does change significantly. Sometimes the absolute direction of the force may have an influence on the measures. For example, if the numerical controlled machine moves the tool along an arc by controlling two linear motions in x and y direction.

Further an embodiment of the method prescribes removing the respective support point comprises removing the respective support point if the absolute value of the force changes less than a predetermined threshold.

Additionally, an embodiment of the method is proposed, wherein removing the respective support point comprises removing the respective support point if the temperature of the tool of the numerical controlled machine changes less than a predetermined threshold and/or if the temperature of the workpiece changes less than a predetermined threshold.

In another embodiment of the method, providing for each support point of the first sequence of support points at least a value for at least one interaction parameter comprises simulating the machining process based on the first discretised tool path. Simulating the machining process before actually machining the workpiece to obtain the values of the interaction parameter may avoid producing workpieces with a geometry not complying with the predetermined workpiece geometry. However, it is also possible to obtain the interaction parameters based on previous machining of a workpiece with the given geometry.

Furthermore, machining may comprise a subtractive machining process or an additive manufacturing process. The proposed method can be used for subtractive manufacturing processes or additive machining processes. For example, the numerical controlled machine may be a lathe, a milling machine or a drilling machine. However, the numerical controlled machine may also be a 3D printer. In particular, for additive machining processes, knowledge concerning the temperature at the workpiece of the tool may have significant influence on the quality of the workpiece and may have to be taken into account by the numerical controlled machine. Heat conduction in the material to be deposited, the deposited material and/or the substrate may also influence the quality of the workpiece. Thus, these interaction parameters may also be important to improve the manufacturing process. Further interaction parameters which may be taken into account are the mass flow of the deposited material and/or the energy input at the local position of the tool of the numerical controlled machine.

Additionally, an embodiment of the method is proposed, wherein providing the first discretised tool path comprises selecting the number and/or position of the support points of the first sequence of support points based on a user input; or determining the number and/or position of the support points of the first sequence of support points based on a prescribed workpiece tolerance. The number of support points of the first discretised tool path may be preselected by a user. For example, a support point may be provided every 0.3 mm. The support points may also be provided in irregular distances. For example, more support points may be provided when the tool path follows an irregular curve and less when the tool path follows the arc of a circle or a straight line. Alternatively, the number of support points may be derived from a prescribed tolerance the final workpiece has to comply with. This may help to ensure that a sufficient number of support points for simulating the machining process and obtaining the interference parameter is provided while reducing the risk that too many support points are used, which may lead to a very long calculation time for simulating the machining process.

In another embodiment, the method further comprises identifying similar sub-sequences in the first sequence of support points before and/or after providing each support point with a value of an interaction parameter. Identifying similar sub-sequences in the first sequence of support points before providing each support point with a value of an interaction parameter may reduce the complexity for simulating the machining process. For example, it may be assumed that the respective values of interaction parameters corresponding to the similar sub-sequences are very similar, too. Hence, it may be sufficient to simulate the machining only one of these sub-sequences and to use the obtained value for the other sub-sequence(s). The alternative or additional identification of similar sub-sequences after providing the interaction parameters may reduce the computation resources for identifying the support points which may be removed. Similar sub-sequences may be for examples sub-sequences in different layers of the workpiece. For example, for machining a depression with a given depth in a solid it may be required to repeat the same machining process for several layers to obtain the given depth.

Furthermore, an embodiment is proposed, wherein the method further comprises identifying features of the predetermined workpiece geometry and splitting the first discretised tool path in at least two first discretised tool paths based on the identified features, and performing one of the aforementioned methods at least two of the at least two first discretised tool paths in parallel. When designing a workpiece using, e.g., a CAD program, several features for example depressions, holes, etc. may be included in the predetermined workpiece geometry. The method may prescribe identifying said features and performing the steps for generating the second discretised tool path from the first discretised tool path for each of said features in parallel. For example, the method may be performed for each feature by a different processor core in a multiple processor core computer system. Said approach may reduce the total time required for performing the method, in particular, for workpiece having a large number of features. Distributing the computing tasks between the different processor cores based on features of the predetermined workpiece geometry may facilitate identifying similar sub-sequences as similar sub-sequences may be more frequently found within a single feature.

In addition a computer program is disclosed, wherein the computer program comprises instructions which, when executed by a computer, cause the computer to carry out a method according to any one of the aforementioned embodiments.

Moreover, a sequence of control commands is proposed which, when executed by a numerical controlled machine, cause the numerical controlled machine to machine a workpiece to obtain a predetermined workpiece geometry, wherein the sequence of control commands is derived from a discretised tool path obtained by using an aforementioned method, wherein a control command is provided for each support point of the second sequence of support points of the second discretised tool path, and wherein said control command comprises information indicative of the values of the first interaction parameter associated with the respective support point.

In an embodiment, the sequence of control commands comprises at least one subsequence of control commands corresponding to the two sub-sequences of support points or to the at least two second discretised tool paths.

The drawings included in the present application are incorporated into, and form part of, the specification. They illustrate embodiments of the present disclosure and, along with the description, serve to explain the principles of the disclosure. The drawings are only illustrative of certain embodiments and do not limit the disclosure. In the drawings
- Fig. 1: illustrates a tool path for machining a workpiece;
- Fig. 2: illustrates a first discretised tool path; and
- Fig. 3: illustrates a second discretised tool path.

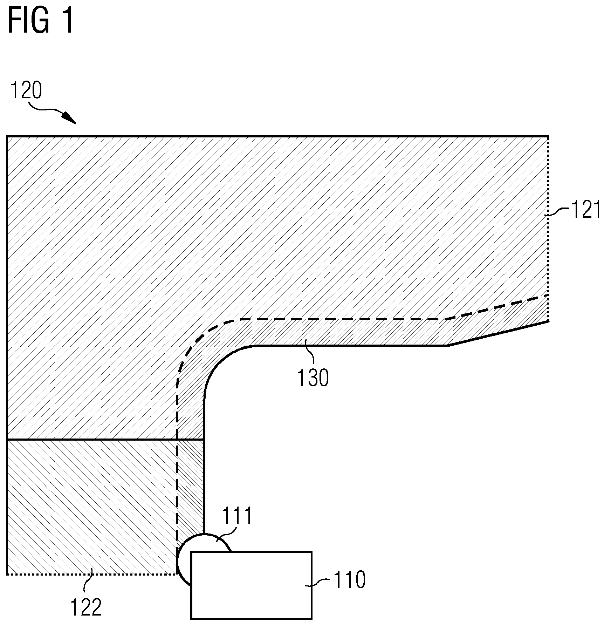

Fig. 1 shows a numerical controlled machine 110 in form of a milling machine, operating a tool 111 in form of a milling cutter. The tool 111 can rotate around an axis R to remove material from a workpiece 120 coming in contact with the tool 111. In the example, the axis R is parallel to the axis z. The workpiece 120 comprises a first portion 121 made of a first material and a second portion 122 made of a second material. The first material and the second material may have different properties. For example, machining the first material may be more difficult than machining the second material.

The rotating tool 111 can be moved along tool path 130 to machine the workpiece 120 to obtain a predetermined workpiece geometry indicated with a dotted line. In the example shown in Fig. 1 the tool path 130 lies in a single plane defined by an axis x and an axis y. Moreover, the rotation axis of the rotating tool 111 is not changed. Generally, the tool path 130 may describe an arbitrary trajectory in the three dimensional space and include information on a changing orientation of the rotating axis R in the three dimensional space.

During machining of the workpiece 120 with the tool 111, the tool 111 will experience forces and torques. In case the machine 110 is not sufficiently stiff, the forces and/or torques may lead to a deflection of the tool 111. In particular, larger forces or torques increase the deflection and robots may have lower stiffness than machining centres. The deflections may result in a workpiece having a geometry not corresponding to the intended predetermined workpiece geometry. In particular, deviations between the actual workpiece geometry and the intended predetermined workpiece geometry may surpass predetermined tolerances.

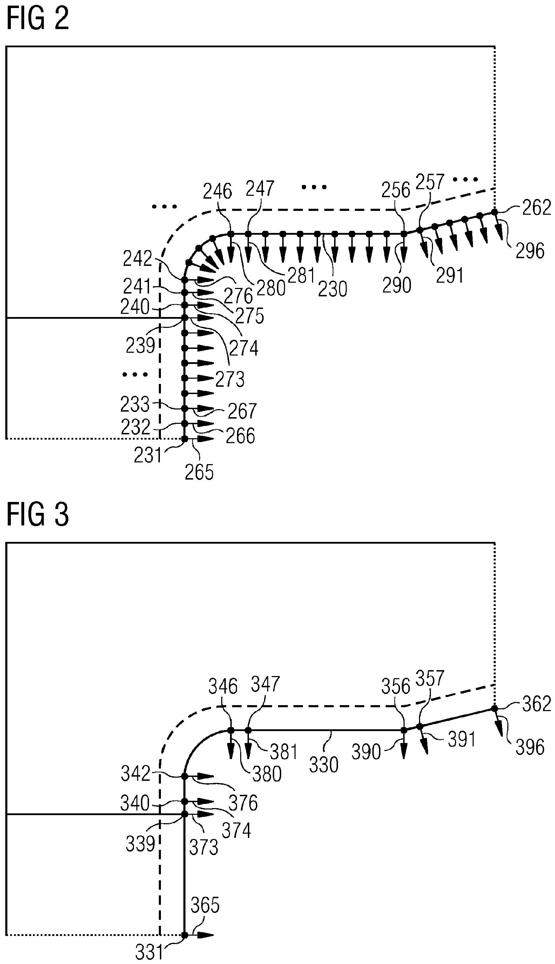

In order to generate a sequence of control comments for controlling the numerical controlled machine 110 to machine the workpiece 120, the tool path 130 may be discretised in smaller portions and a first discretised tool path 230 shown in Fig. 2 may be obtained. The first discretised tool path 230 may be defined by a first sequence of support points 231 to 262. Each support point 231 to 262 may define a movement to be performed by the tool 111 to the next support point.

The process of machining the workpiece 120 with the numerical controlled machine 110 may be simulated before actually modifying the workpiece 120. Heretofore, the first discretised tool path 230 may be used. For each of the support points of the first sequence of support points 231 to 262, at least one interaction parameter 265 to 296, respectively, may be obtained. For example, the interaction parameter may correspond to a torque experienced by the tool 111 or a temperature of the tool 111 or a temperature of the workpiece 120 or a force experienced by the tool 111 at the respective support point 231 to 262. Information on the at least one interaction parameter may be used by the numerical controlled machine 110 to counteract undesired consequences if the value of an interaction parameter 265 to 296 surpasses a critical threshold. For example, the numerical controlled machine 110 may provide extra cooling at the interface of the tool 111 and the workpiece 120, if the temperature determined for the respective support point 231 to 262 is too high. Moreover, the numerical controlled machine 110 may counteract a deflection due to a force acting on the tool 111 by modifying the actual trajectory of the tool 111. In Fig. 2, simulated forces 265 to 296 acting on the tool 111 during machining are shown.

Generally, increasing the number of support points 231 to 262 improves the result of the simulation of the process of machining the workpiece 120. This may allow for more precisely machining the workpiece 120 and may result in a workpiece geometry which better complies with the predetermined workpiece geometry.

However, increasing the number of support points 231 to 262 typically also increases the length of the sequence of control commands.

A very long sequence of control commands may be difficult to handle. For example, human readability of the sequence of control commands may be reduced rendering checking of the sequence of control commands by operators of the numerical controlled machine more difficult.

Hence, it may be advantageous to reduce the number of support points 231 to 262 actually used for generating the sequence of control commands. Heretofore, it is proposed to generate a second discretised tool path 330 as shown in Fig. 3 based on the first discretised tool path 230 and the corresponding values of the interaction parameter.

At least one support point, except for the first and last support point of the first sequence of support points, of the first sequence of support points and the value of the at least one interaction parameter of the associated with said support point are compared with the subsequent support point and the value of the at least one interaction parameter associated with the subsequent support point.

For example, the support point 232 and the value of its associated interaction parameter 266 are compared with the subsequent support point 233 and the value of its associated interaction parameter 267

Based on the result of the comparison the respective support point 232 may be removed from the first sequence of support points 231 to 262 to obtain a second sequence of support points defining the second discretised tool path 330.

Comparing the support points may involve determining whether the value of the first physical changes more than a predetermined value. In case the first interaction parameter corresponds to a vector, changing can comprise changing a direction of the vector or changing an absolute value of the vector.

For example, the tool is to follow the same trajectory before support point 232 and before the subsequent support point 233. Moreover, the first interaction parameter, i.e., the direction and amount of the force 267 with respect to the force 266 does not change. Thus, the support point 232 may be removed.

Similarly, the tool is to follow the same (curved) trajectory before support point 245 and before the subsequent support point 246 and the direction and the amount of the force 279, 280 with respect to the movement direction of the tool does not change either. Hence, the support point 245 may also be removed.

Before support point 239 and before the subsequent support point 240, the tool 111 is to follow the same trajectory. However, the amount and direction of the force experienced by the tool, 273 and 274, respectively, changes significantly due to the exemplary workpiece 120 comprising the first portion 121 made of the first material and the second portion 122 made of the second material. Thus, the support point 239 is to be maintained for the second discretised tool path 330.

At support point 256, the travel direction of the tool 111 changes by more than a predetermined threshold. The tool 111 follows a different trajectory before the support point 256 and the subsequent support point 257. Even if the force experienced by the tool 111, 290, 291, does not change significantly, the support point 256 is kept for the second discretised tool path.

By comparing the all support points 232 to 261 and the respective interaction parameters 266 to 295 with the respective subsequent support points 233 to 262 and the associated interaction parameters 267 to 297 the second discretised tool path 330 comprising a significantly reduced number of support points 331, 339, 340, 342, 346, 347, 356, 357, 362 may be obtained.

## Claims

1. Method for providing a discretised tool path (330) for machining a workpiece (120) to obtain a predetermined workpiece geometry, wherein the method comprises:
providing a first discretised tool path (230) for machining the workpiece (120) with a predetermined numerical controlled machine (110),
wherein the first discretised tool path (230) is defined by a first sequence of support points (231, ..., 262);
providing for each support point (231, ..., 262) of the first sequence of support points (231, ...., 262) at least a value (265, ..., 296) for at least one interaction parameter describing an interaction of a tool (111) with the workpiece (120) ;
comparing at least one support point (232), except for the first and last support point of the first sequence of support points, of the first sequence of support points (231, ..., 262) and the associated value (266) of the at least one interaction parameter of the support point (232) with the subsequent support point (233) and the value (267) of the at least one interaction parameter associated with the subsequent support point (267); and
removing the respective support point (232) from the first sequence of support points (231, ..., 262) based on the result of the comparison to obtain a second sequence of support points (331, 339, 340, 342, 346, 347, 356, 357, 362) defining a second discretised tool path (330) for machining the workpiece (120) with the predetermined numerical controlled machine to obtain the predetermined workpiece geometry.

2. Method according to claim 1,
wherein each support point (231) indicates a movement trajectory to be performed by the tool (111) of the numerical controlled machine (110) to the next support point (232).

3. Method according to claim 2,
wherein removing the respective support point (232) comprises removing the respective support point (232)
if the value (366) of the at least first interaction parameter and/or the value of the interaction parameters change less than a predetermined threshold, and
if the indicated movement trajectory changes less than a predetermined threshold.

4. Method according to claim 3,
wherein the first interaction parameter is one of:
a force experienced by a tool of the numerical controlled machine,
a torque experienced by a tool of the numerical controlled machine,
a temperature of a tool of the numerical controlled machine or of the workpiece,
heat conduction in the material to be deposited,
heat conduction in the deposited material,
mass flow of deposited material,
energy input.

5. Method according to claim 4,
wherein removing the respective support point comprises removing the respective support point
if the direction of the force with respect to the corresponding movement trajectory changes less than a predetermined threshold, or
if the absolute direction of the force with respect to the workpiece changes less than a predetermined threshold.

6. Method according to claim 4 or 5,
wherein removing the respective support point comprises removing the respective support point
if the absolute value of the force and/or the torque changes less than a predetermined threshold.

7. Method according to any one of claims 4 to 6,
wherein removing the respective support point comprises removing the respective support point
if the temperature of the tool of the numerical controlled machine changes less than a predetermined threshold, and/or if the temperature of the workpiece changes less than a predetermined threshold.

8. Method according to any one of the preceding claims,
wherein providing for each support point of the first sequence of support points (231, ..., 362) at least a value (265, ..., 396) for at least one interaction parameter comprises simulating the machining process based on the first discretised tool path (230).

9. Method according to any one of the preceding claims, wherein machining comprises
a subtractive manufacturing process or
an additive manufacturing process.

10. Method according to any one of the preceding claims,
wherein providing the first discretised tool path (230) comprises
selecting the number and/or position of the support points (231, ..., 262) of the first sequence of support points based on a user input; or
determining the number and/or position of the support points (231, ...., 262) of the first sequence of support points based on a prescribed workpiece tolerance.

11. Method according to any one of the preceding claims, further comprising identifying similar sub-sequences in the first sequence of support points before and/or after providing each support point with a value of an interaction parameter.

12. Method according to any one of the preceding claims, wherein the method further comprises
identifying features of the predetermined workpiece geometry and splitting the first discretised tool path in at least two first discretised tool paths based on the identified features, and
performing the method according to any one of claims 1 to 7 for at least two of the at least two first discretised tool paths in parallel.

13. Computer program comprising instructions which, when executed by a computer, cause the computer to carry out the method according to any one of the claims 1 to 12.

14. Sequence of control commands which, when executed by a numerical controlled machine, cause the numerical controlled machine to machine a workpiece to obtain a predetermined workpiece geometry,
wherein the sequence of control commands is derived from a discretised tool path obtained by using a method according to any one of claims 1 to 12,
wherein a control command is provided for each support point of the second sequence of support points of the second discretised tool path, and
wherein said control command comprises information indicative of the values of the first interaction parameter associated with the respective support point.

15. Sequence of control commands according to claim 14,
wherein the sequence of control commands is derived from a discretised tool path obtained by using a method according to claim 7 or 8,
wherein the sequence of control commands comprises at least one subsequence of control commands corresponding to the two sub-sequences of support points or to the at least two second discretised tool paths.
